# EUROPEAN PATENT APPLICATION

(11) **EP 2 554 896 A1**
(43) Date of publication of application: **06.02.2013**
(21) Application number: 11786396.9
(22) Date of filing: 10.03.2011
(51) Int. Cl.: F21S 2/00, G02F 1/1333, G02F 1/13357, H04N 5/66, F21Y 101/02

(54) **LIGHTING DEVICE, DISPLAY DEVICE, AND TELEVISION RECEIVING DEVICE**

(30) Priority: 25.05.2010 JP 2010119354
(71) Applicant: Sharp Kabushiki Kaisha, Osaka-shi, Osaka 545-8522 (JP)
(72) Inventor: NAMEKATA Yuuki, OSAKA 545-8522 (JP)
(74) Representative: Müller-Boré & Partner Patentanwälte
(86) International application number: PCT/JP2011/055603
(87) International publication number: WO 2011/148696

(57) **Abstract**

Uneven brightness in light exited from a light guide plate is less likely to be caused in a lighting device. A backlight device 24 includes an LED unit 32, a light guide plate 20 having a light entrance surface 20a on its side surface, and a backlight chassis 22 including a bottom plate 22a and housing the LED unit 32 and the light guide plate 20 on a front surface of the bottom plate. The LED unit 32 is arranged to face the light entrance surface 20a of the light guide plate 20. The backlight chassis 22 includes a positioning pin 40 on its front surface of the bottom plate 22a. The positioning pin 40 is projected from the front surface. The light guide plate 20 has a recessed fitting portion 38 corresponding to the positioning pin 40, and the positioning pin 40 is fitted to the fitting portion 38. A through hole 40a is formed in peripheral surface of the positioning pin 40 so as to be through the positioning pin 40.

## Description

### TECHNICAL FIELD

The present invention relates to a lighting device, a display device and a television receiver.

### BACKGROUND ART

In recent years, display elements of an image display device, such as a television receiver, are in a transition from the conventional cathode-ray tube to flat display panel, such as liquid crystal panel or plasma display panel, making it possible to provide a flat image display device. Such a liquid crystal panel used for a liquid crystal display device such as a liquid crystal television does not emit light, and thus a backlight unit is required as a separate lighting device.

Patent Document 1 discloses a backlight unit including projections that position a light guide plate that guides light from light sources. Such a backlight unit includes light sources, a light guide plate having side surfaces as light entrance surfaces, and a backlight chassis that houses the light sources and the light guide plate. The projections a part of which is chamfered are provided on a part of the side surfaces of the light guide plate and recesses are provided on a part of side plates of the backlight chassis corresponding to the projections. The light sources are arranged to face the light entrance surface on which no projection is provided. In the backlight unit, the corresponding projections and recesses are fitted to each other and accordingly, the light guide plate is positioned with respect to the backlight chassis. Each of the projections is chamfered. Therefore, light from the light sources reflects off side surfaces of the projection for several times and this reduces rays of light entering the light guide plate and accordingly, unevenness in brightness is less likely to occur.

[Patent Document 1] Japanese Unexamined Patent Publication No. 2005-302485

### Problem to be Solved by the Invention

However, in the backlight device disclosed in Patent Document 1, the light sources cannot be arranged to face the light entrance surface of the light guide plate on which the projections are provided.

### DISCLOSURE OF THE PRESENT INVENTION

The present technology was accomplished in view of the above circumstances. It is an object of the present technology to provide a backlight unit that includes a configuration for positioning a light guide plate and in which a light source is arranged to face a desired light entrance surface of the light guide member and unevenness in brightness of light is less likely to occur.

### Means for Solving the Problem

According to the present technology, a lighting device includes a light source, a light guide plate, a housing member, and a fitting portion. The light guide plate has a light entrance surface on its side surface that faces the light source and is configured to guide light emitted from the light source and entering the light entrance surface. The housing member includes a bottom plate having a peripheral edge and a main surface, a side plate rising from the peripheral edge on a main surface side, and a projection projecting from the main surface of the bottom plate and having a through hole formed in its side surface and through the projection. The housing member houses the light source and the light guide plate on the main surface side of the bottom plate. The fitting portion is provided on the light guide plate so as to be recessed or formed through the light guide plate corresponding to the projection, and the fitting portion is configured to be fitted to the projection.

According to the above lighting device, the projection provided on the bottom plate of the housing member is fitted to the fitting portion provided in the light guide plate and thereby positioning the light guide plate with respect to the bottom plate of the housing member. Accordingly, the light source can be arranged to face a desired light entrance surface provided on a side surface of the light guide plate. Further, the light traveling through the light guide plate and reaching the vicinity of the projection passes through the through hole formed in the projection. Therefore, the light is less likely to be blocked by the projection. Even provided with the positioning mechanism for positioning the light guide plate, the light source can be arranged to face a desired light entrance surface of the light guide plate, and unevenness in brightness of light exited from the light guide plate is less likely to be caused.

The through hole may have an opening and may be formed in the projection such that the opening faces the light source that is closest to the through hole.
With this configuration, the light traveling through the light guide plate and reaching the vicinity of the projection easily passes through the through hole formed in the projection. Accordingly, unevenness in brightness of light exited from the light guide plate is less likely to be caused.

The lighting device may further include a reflection sheet provided between the light guide plate and the main surface of the housing member and configured to reflect light. The reflection sheet may have a reflection sheet hole that is formed through the reflection sheet and corresponding to the projection. The projection may be inserted through the reflection sheet hole of the reflection sheet and fitted to the fitting portion.
With this configuration, the projection is fitted to the reflection sheet hole and thereby positioning the reflection sheet with respect to the housing member.

The light guide plate may have a plurality of side surfaces as a plurality of light entrance surfaces. The light source may include a plurality of light sources, and the light sources may be arranged to face each of the light entrance surfaces of the side surfaces of the light guide plate.
With this configuration, the light source can be arranged to face all of the side surfaces of the light guide plate.

The through hole may include a plurality of through holes.
With this configuration, the through holes are formed in the projection, and accordingly, light easily passes through the through holes formed in the projection. The light is less likely to be blocked by the projection.

The bottom plate of the housing member and the projection may be integrally molded with each other.
With this configuration, the projection can be produced in a process of manufacturing the housing member, and therefore, the projection is easily provided.

The lighting device may further include a reflection member provided between the light source and the light guide plate. The light entrance surface may be formed in an elongated shape, and the reflection member may be provided along the elongated shape of the light entrance surface.
With this configuration, the reflection member leads a part of rays of light from the light source that is scattered to the outside the light guide plate to the light guide plate. This increases light entrance efficiency of light that exits from the light source and enters the light guide plate.

The present technology may be applied to a display device including the above lighting device and a display panel configured to provide display using light from the lighting device. The display device may include a liquid crystal panel as the display panel. A television receiver may include the display device. This achieves an increased display area.

### Advantageous Effect of the Invention

The present invention provides a lighting device that includes a configuration for positioning a light guide plate and in which a light source is arranged to face a desired light entrance surface of the light guide plate and uneven brightness of light is less likely to occur.

### BRIEF DESCRIPTION OF THE DRAWINGS

FIG. 1 is an exploded perspective view illustrating a television receiver TV according to a first embodiment;
FIG. 2 is an exploded perspective view illustrating a liquid crystal display device 10;
FIG. 3 is a cross-sectional view of the liquid crystal display device 10;
FIG. 4 is a plan view of a light guide plate 20 and LED units 32 seen from a front side;
FIG. 5 is an enlarged perspective view of a positioning pin 40;
FIG. 6 is an exploded view illustrating a liquid crystal display device 110 of a second embodiment;
FIG. 7 is a cross-sectional view of the liquid crystal display device 110;

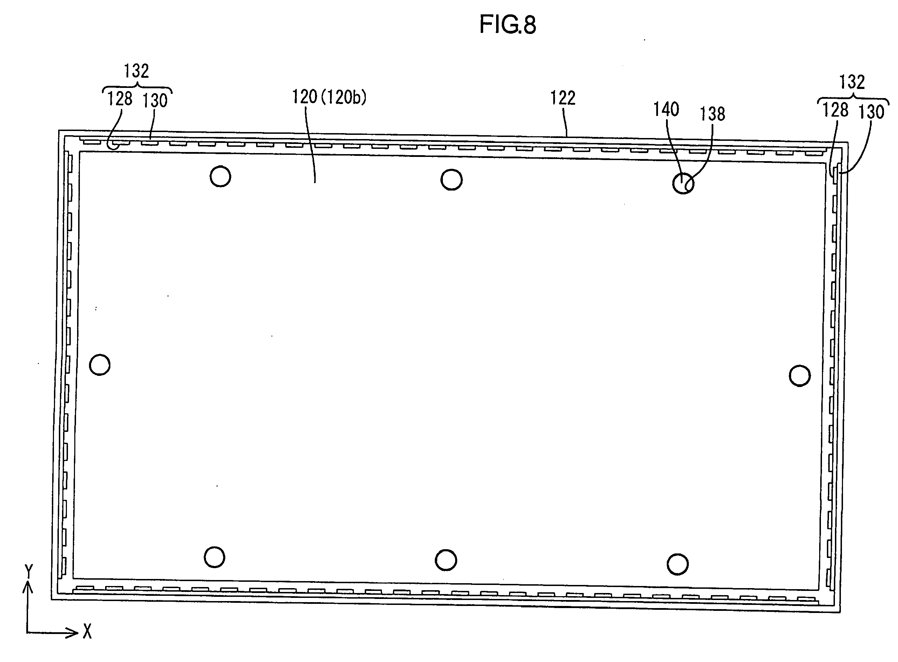

FIG. 8 is a plan view illustrating a light guide plate 120 and LED units 132 seen from a front side;
FIG. 9 is an enlarged perspective view of a positioning pin 240 provided in a backlight unit according to a third embodiment;
FIG. 10 is an enlarged perspective view of a positioning pin 340 provided in a backlight unit according to a fourth embodiment;
FIG. 11 is an enlarged perspective view of a positioning pin 440 provided in a backlight unit according to a fifth embodiment; and
FIG. 12 is an enlarged perspective view of a positioning pin 540 provided in a backlight unit according to a sixth embodiment.

### MODE FOR CARRYING OUT THE INVENTION

### <First Embodiment>

A first embodiment of the present invention will be described with reference to attached drawings. An X-axis, a Y-axis and a Z-axis are described in a part of the drawings, and a direction of each axial direction corresponds to a direction described in each drawing. The Y-axis direction corresponds to a vertical direction and the X-axis direction corresponds to a horizontal direction. Description of upper or lower is used with reference to the vertical direction.

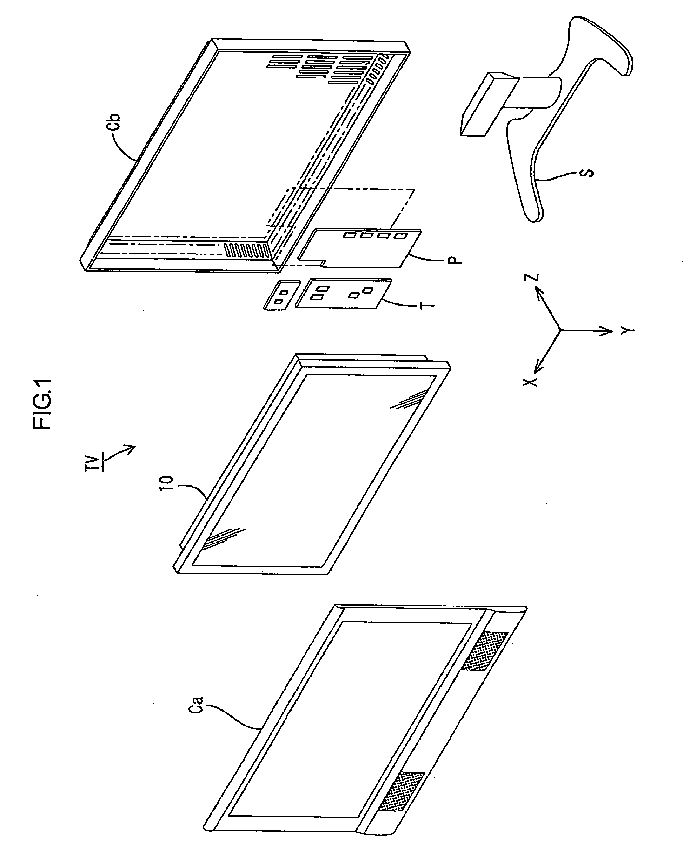

FIG. 1 is an exploded perspective view illustrating a television receiver TV according to the first embodiment. As illustrated in FIG. 1, the television receiver TV includes a liquid crystal display device 10, front and rear cabinets Ca, Cb which house the liquid crystal display device 10 therebetween, a power source P, a tuner T and a stand S.

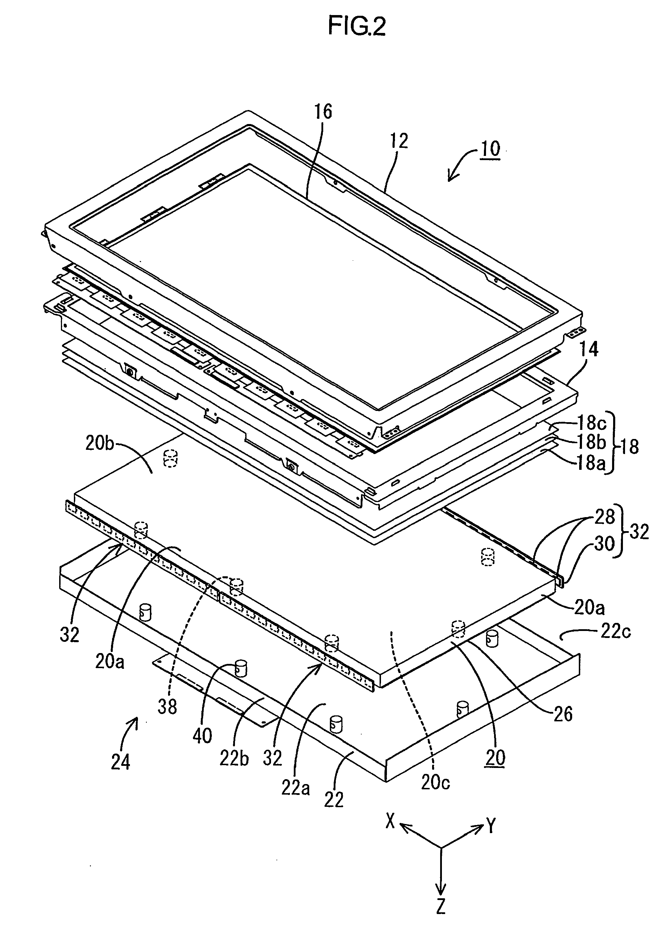

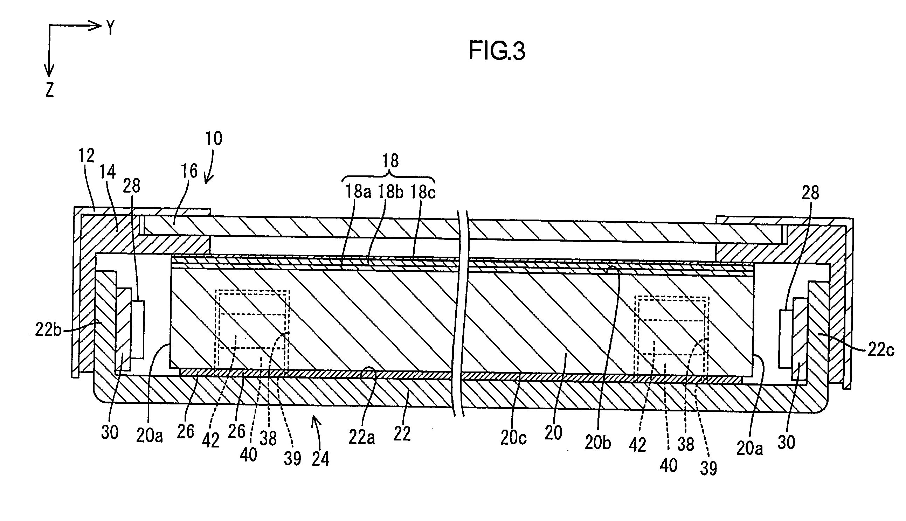

FIG. 2 is an exploded perspective view of the liquid crystal display device 10. FIG. 3 is a cross-sectional view of the liquid crystal display device 10. In FIGS. 2 and 3, an upper side corresponds to a front-surface side and a lower side corresponds to a rear-surface side. As illustrated in FIG. 2, an entire shape of the liquid crystal display device 10 is a landscape rectangular and the liquid crystal display device 10 includes a liquid crystal panel 16 as a display panel, and a backlight device 24 as an external light source. The liquid crystal panel 16 and the backlight device 24 are integrally held by a frame shaped bezel 12 and the like.

Next, the liquid crystal panel 16 will be described. The liquid crystal panel 16 is configured such that a pair of transparent (capable of high transmission) glass substrates is bonded together with a predetermined gap therebetween and a liquid crystal layer (not illustrated) is sealed between the glass substrates. On one of the glass substrates, switching components (for example, TFTs) connected to source lines and gate lines which are perpendicular to each other, pixel electrodes connected to the switching components, and an alignment film and the like are provided. On the other substrate, color filters having color sections such as R (red), G (green) and B (blue) color sections arranged in a predetermined pattern, counter electrodes, and an alignment film and the like are provided. Image data and various control signals that are required to display images are supplied to the source lines, the gate lines and the counter electrodes from a drive circuit board. Polarizing plates (not illustrate) are attached to outer surfaces of the glass substrates.

The backlight device 24 will be explained in detail. As illustrated in FIG. 2, the backlight device 24 includes a backlight chassis 22, an optical member 18, and a frame 14. The backlight chassis 22 has a substantially box-shape and has an opening on the front-surface side (a light exit side, a liquid crystal panel 16 side). The optical member 18 is provided on the front surface side (a light exit surface 20b side) of the light guide plate. The frame 14 is formed in a frame shape and supports the liquid crystal panel 16 along its inner edge.

LED (Light Emitting Diode) units 32, a reflection sheet 26 and the light guide plate 20 are housed in the backlight chassis 22. The LED unit 32 is provided on each long-side outer surface (a side plate) 22b, 22c of the backlight chassis 22 and emits light. Long-side surface (a light entrance surface) 20a of the light guide plate 20 is arranged to face the LED unit 32 and the light guide plate 20 guides light exited from the LED unit 32 toward the liquid crystal panel 16. The optical member 18 is placed on the front-surface side of the light guide plate 20. In the backlight device 24 of the present embodiment, the light guide plate 20 and the optical member 18 are arranged just below the liquid crystal panel 16 and the LED unit 32 that is a light source is arranged on a side end portion of the light guide plate 20. Therefore, the backlight device 24 of the present embodiment is an edge light type (a side light type).

The backlight chassis 22 is made of metal such as an aluminum type material and includes a bottom plate 22a having a plan view rectangular shape, and side plates 22b, 22c each of which rises from an outer edge of the corresponding long side or short side of the bottom plate 22a. A space in the backlight chassis 22 that faces the LED units 32 is a housing space in which the light guide plate 20 is housed.

A reflection sheet 26 is provided on the front-surface side of the bottom plate 22a of the backlight chassis 22. The reflection sheet 26 has a reflection surface on its front-surface side and the reflection surface faces a rear surface 20c of the light guide plate 20. Light leaking from the LED units 32 reflects off the reflection surface of the reflection sheet 26 and this leads the light to enter the rear surface 20c of the light guide plate 20. A power source circuit board (not illustrated) that supplies power to the LED units 32 is provided on a rear-surface side of the bottom plate 22a.

The light guide plate 20 is formed in a rectangular plate and formed of resin having high transmission property (high transparency) such as acrylic and is supported by the backlight chassis 22. As illustrated in FIG. 2, the light guide plate 20 arranged in a space between the LED units 26 in the backlight chassis such that a light exit surface 20b that is a main plate surface faces a diffuser sheet 18a. With this arrangement of the light guide plate 20, light exited from the LED units 26 enters the light entrance surface 20a of the light guide plate 20 and exits from the light exit surface 20b that faces the diffuser sheet 18a. Accordingly, a rear surface of the liquid crystal panel 16 is irradiated with light.

Positioning pins 40 are provided on a front surface of the bottom plate 22a of the backlight chassis 22 so as to project therefrom toward the rear surface 20c of the light guide plate 20. The reflection sheet 26 has reflection sheet holes 39 (refer to FIG. 3) in positions corresponding to the positioning pins 40. Each of the reflection sheet holes 39 has a size in which the positioning pin 40 passes through. Recessed fitting portions 38 are provided on the rear surface 20c of the light guide plate 20 in positions corresponding to the positioning pins 40. Each of the positioning pins 40 passes through the corresponding reflection sheet hole 39 and thereby positioning the reflection sheet 26 with respect to the backlight chassis 22. Further, the positioning pin 40 passes through the reflection sheet hole 39a and is fitted to the corresponding fitting portion 38 and thereby positioning the light guide plate 20 with respect to the backlight chassis 22.

The optical member 18 includes a diffuser sheet 18a, a lens sheet 18b, and a reflecting type polarizing sheet 18c that are laminated from the light guide plate 20 side in this order. The diffuser sheet 18a, the lens sheet 18b, and the reflecting type polarizing sheet 18c convert light that exits from the LED unit 32 and passes through the light guide plate 20 into planer light. The liquid crystal panel 16 is provided on an upper-surface side of the reflecting type polarizing sheet 18c and the optical member 18 is provide between the light guide plate 20 and the liquid crystal panel 16.

The LED unit 32 includes an LED board 30 and LED light sources 28 that emit white light. The LED board 30 is formed in a rectangular shape and made of resin. The LED light sources 28 are arranged in a line on the LED board 30. The LED board 30 is fixed to the side plate 22b, 22c of the backlight chassis 22 by screws. Each LED light source 28 may include a blue light emission element that is coated with a phosphor having a light emission peak in a yellow range and emit white light. Each LED light source 28 may include a blue light emission element that is coated with a phosphor having a light emission peak in a green range and a phosphor having a light emission peak in a red range and emit white light. Each LED light source 28 may include a red light emission element and a blue light emission element that is coated with a phosphor having a light emission peak in a green range and emit white light. Each LED light source 28 may include a blue light emission element, a green light emission element and a red light emission element and emit white light. Each LED light source 28 may include an ultraviolet light emission element and a phosphor. Especially, each LED light source 28 may include an ultraviolet light emission element coated with phosphors each having a light emission peak in each of a blue range, a green range, and a red range and emit white light.

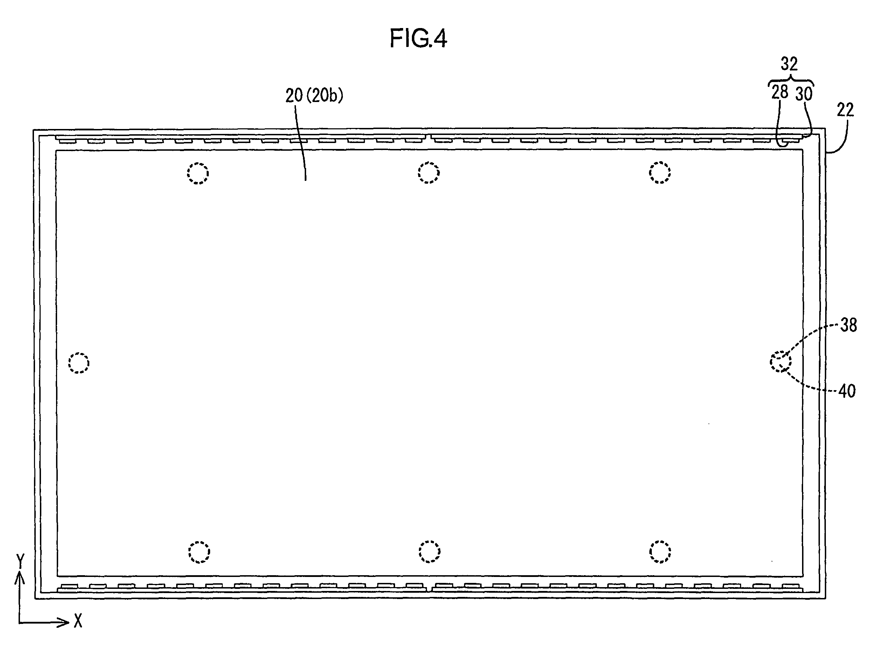

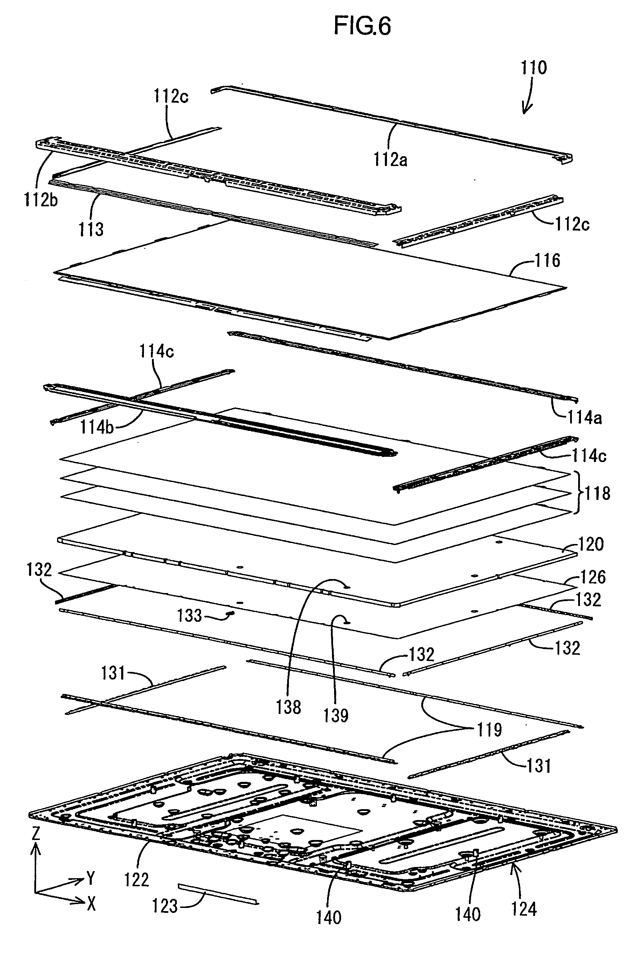

Next, an arrangement and a configuration of the positioning pin 40 will be explained. FIG. 4 is a plan view of the light guide plate 20 and the LED units 32 seen from the front-surface side. FIG. 6 is an enlarged perspective view of the positioning pin 40.

As illustrated in FIG. 4, eight positioning pins 40 are provided on the bottom plate 22a of the backlight chassis 22. Three poisoning pins 40 are provided along each long side of the bottom plate 22a of the backlight chassis 22 and one is provided on each short side thereof. The light guide plate 20 has eight fitting portions 38 that are provided to correspond to the positioning pins 40.

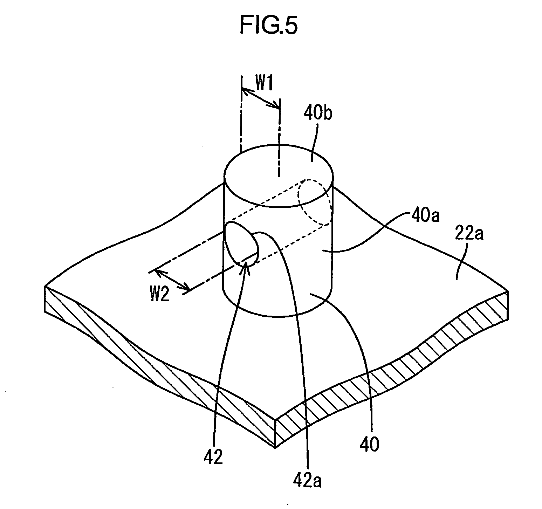

As illustrated in FIG. 5, the positioning pin 40 is formed in a cylindrical column. A through hole 42 is formed in a peripheral surface 40a of the positioning pin 40 so as to penetrate through the cylindrical column of the positioning pin 40. The through hole 42 extends parallel to a surface of the bottom plate 22a of the backlight chassis 22. The through hole 42 is provided such that its opening 42a faces the LED light source 28 that is closest to the through hole 42. The through hole 42 is preferably formed such that the opening 42a has a diameter W2 greater than a radius W1 of a top surface of the positioning pin 40. With this configuration, light easily passes though the through hole 42. A bottom surface of the positioning pin 40 is adhered or bonded to the bottom plate 22a of the backlight chassis 22 and fixed thereto.

In the backlight device 24, if the LED light sources 28 are lit on, light from the LED light sources 28 enter the light guide plate 20 through the light entrance surfaces 20a. If the light entering the light guide plate 20 reaches the vicinity of the positioning pin 40, the light passes through the through hole 42 formed in the positioning pin 40. Therefore, in the vicinity of the positioning pin 40, a shadow is less likely to be generated by the positioning pin 40 that blocks the light.

In the backlight device 24 according to the present embodiment, each of the positioning pins 40 provided on the bottom plate 22a of the backlight chassis 22 is fitted to each of the fitting portions 38 provided in the light guide plate 20 and thereby positioning the light guide plate 20 with respect to the bottom plate 22a of the backlight chassis 22. Accordingly, the LED unit 32 can be arranged to face a desired light entrance surface 20a provided on a side surface of the light guide plate 20. Further, the light traveling through the light guide plate 20 and reaching the vicinity of the positioning pin 40 passes through the through hole 42 of the positioning pin 40. Therefore, the light is less likely to be blocked by the positioning pin 40. Even provided with the positioning mechanism for positioning the light guide plate 20, the LED unit 32 can be arranged to face a desired light entrance surface 20a of the light guide plate 20, and unevenness in brightness of light exited from the light guide plate 20 is less likely to be caused.

In the backlight device 24 according to the present embodiment, the through hole 42 is formed such that the opening 42a faces the LED light source 28 that is closest to the through hole 42. Therefore, the light traveling through the light guide plate 20 and reaching the vicinity of the positioning pin 40 easily passes through the through hole 42 of the positioning pin 40. Accordingly, unevenness in brightness of light exited from the light guide plate 20 is less likely to be caused.

In the backlight device 24 according to the present embodiment, the reflection sheet 26 that reflects light is provided between the light guide plate 20 and the front surface of the backlight chassis 22. The reflection sheet 26 has the reflection sheet holes 39 penetrating through the reflection sheet 26 on positions corresponding to the positioning pins 40. Each of the positioning pins 40 is inserted through the corresponding reflection sheet hole 39 and fitted to each fitting recess. Accordingly, the positioning pin 40 is fitted to the reflection sheet hole 39 and thereby positioning the reflection sheet 26 with respect to the backlight chassis 22.

### <Second Embodiment>

A second embodiment will be explained with reference to drawings. FIG. 6 is an exploded perspective view of a liquid crystal display device 110 according to a second embodiment. Herein, the upper side in FIG. 6 is assumed as the front-surface side and the lower side in FIG. 6 is assumed as the rear-surface side. As illustrated in FIG. 6, the liquid crystal display device 110 has a horizontally-long rectangular shape as a whole, and includes a liquid crystal panel 116 serving as a display panel, and a backlight device 124 serving as an external light source. These are integrally held by a top bezel 112a, a bottom bezel 112b, side bezels 112c (hereinafter referred to as a bezel group 112a to 112c), and the like. Note that since the structure of the liquid crystal panel 116 is similar to that of the first embodiment, the description thereof is omitted.

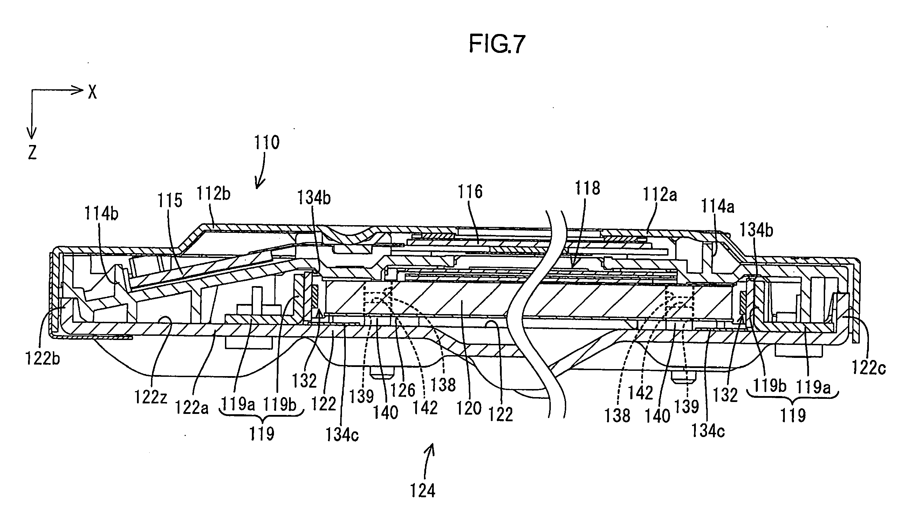

The backlight device 124 will be described below. As illustrated in FIG. 6, the backlight device 124 includes a backlight chassis 122, an optical member 118, a top frame 114a, a bottom frame 114b, and side frames 114c (hereinafter referred to as a frame group 114a to 114c). The liquid crystal panel 116 is sandwiched between the bezel group 112a to 112c and the frame group 114a to 114c. Note that reference numeral 113 denotes an insulating sheet insulating a drive circuit board 115 (see FIG. 7) driving the liquid crystal panel 116.

The backlight chassis 122 is opened to the front-surface side (light exit side, a liquid crystal panel 116 side) and has a substantially box shape having a bottom plate 122a. The optical member 118 is arranged on the front-surface side of a light guide plate 120. The backlight chassis 122 houses a pair of cable holders 131, 131, a pair of heat sinks 119, 119, two pairs of LED units 132, 132, 132, 132 each extending in the long-side direction and the short-side direction of the backlight chassis 122, a reflection sheet 126, and the light guide plate 120. The reflection sheet 126 is arranged on the rear-surface side of the light guide plate 120. The LED units 132, the light guide plate 120, and the reflection sheet 126 are supported by a rubber bush 133. A power supply circuit board (not illustrated) supplying power to the LED unit 132, a protective cover 123 protecting the power supply circuit board, and the like are attached to the rear surface of the backlight chassis 122. The pair of cable holders 131, 131 is arranged along the short-side direction of the backlight chassis 122, and houses lines electrically connecting the LED units 132 and the power supply circuit board.

The backlight chassis 122 includes a bottom plate 122a having a bottom surface 122z, and side plates 122b and 122c rising by a small distance from the outer edges of the bottom plate 122a, thereby supporting at least the LED units 132 and the light guide plate 120. The light guide plate is provided in a space between the two pairs of LED units 132, 132, 132, 132. The light guide plate 120 and the optical member 118 are sandwiched by the frame group 114a to 114c and the backlight chassis 122.

Each of the heat sinks 119 has an L-shaped cross section including a bottom surface portion 119a and a side surface portion 119b rising from one long-side outer edge of the bottom surface portion 119a. The heat sinks 119 are arranged along one long side of the backlight chassis 122. The bottom surface portion 119a of each heat sink 119 is fixed to the bottom plate 122a of the backlight chassis 122. A pair of LED units 132, 132 that extend along each long side of the backlight chassis 122 are fixed to the side surface portions 119b of the heat sink 119 such that the light exit side faces the light entrance surface of the light guide plate 120. Accordingly, the pair of LED units 132 that extend along each long side of the backlight chassis 122 are supported by the bottom plate 122a of the backlight chassis 122 through the heat sinks 119. The heat sinks 119 radiate heat generated in the LED units 132 to the outside of the backlight device 124 through the bottom plate 122a of the backlight chassis 122.

As illustrated in FIG. 7, the light guide plate 120 is arranged between the pair of LED units 132, 132. The LED units 132, the light guide plate 120, and the optical member 118 are sandwiched by the frame group 114a to 114c and the backlight chassis 122. Further, the drive circuit board 115 is arranged on the front-surface side of the bottom frame 114b. The drive circuit board 115 is electrically connected to the display panel 116 and supplies image data and various control signals necessary for displaying an image to the liquid crystal panel 116. The light guide plate 120 is formed in an elongated shape. Furthermore, reflection members 134a are arranged along the long-side direction (the Y-axis direction) of the light guide plate 120 at a portion on the surface of the bottom frame 114b facing the LED units 132 extending along each long side of the backlight chassis 122. Reflection members134b are arranged also at a portion on the bottom surface 122z of the backlight chassis 122 facing the LED units 132 extending along each long side of the backlight chassis 122 and the reflection members 134b extend along the long-side direction of the light guide plate 120. Configurations of the light guide plate 120, the optical member 118 and the LED unit 132 are similar to those in the first embodiment and will not be explained.

Positioning pins 140 are provided on the bottom plate 122a of the backlight chassis 122. The positioning pins 140 are integrally molded with the bottom plate 122a of the backlight chassis 122. The reflection sheet 126 has reflection sheet holes 139. Arrangement and configurations of the positioning pins 140 and the reflection sheet hole 139 are similar to those in the first embodiment and will not be explained. Fitting portions 138 are formed in positions of the rear surface of the light guide plate 120 corresponding to the positioning pins 140. The fitting portions 138 penetrate through the light guide plate 120. Each of the positioning pins 140 is inserted through the corresponding reflection sheet hole 139. Accordingly, the reflection sheet 126 is positioned with respect to the backlight chassis 122. The positioning pin 140 passes through the corresponding reflection sheet hole 139 and the corresponding fitting portion 138, and accordingly, the light guide plate 120 is positioned with respect to the backlight chassis 122.

As described before, in the backlight device 124 according to the second embodiment, each of the side surfaces of the light guide plate 120 has the light entrance surface 120a, and the LED units 132 are arranged such that each of them faces the light entrance surface of each side surface of the light guide plate 120. This achieves the backlight device 124 in which the LED unit 132 is arranged to face each of the side surfaces of the light guide plate 120.

In the backlight device 124 according to the second embodiment, the positioning pins 140 are integrally molded with the bottom plate 122a of the backlight chassis 122. Therefore, the positioning pins 40 are produced in a process of manufacturing the backlight chassis 122. The positioning pins 140 are easily provided.

In the backlight device 124 according to the second embodiment, the light entrance surface 120a is elongated and the reflection members 134a, 134b are provided between the LED unit 132 and the light guide plate 120 along the longitudinal direction of the light entrance surface. Therefore, the reflection members 134a, 134b lead a part of rays of light from the LED unit 132 that is scattered to the outside the light guide plate 120 to the light guide plate 120. This increases light entrance efficiency of light that exits from the LED unit 132 and enters the light guide plate 120.

### <Third Embodiment>

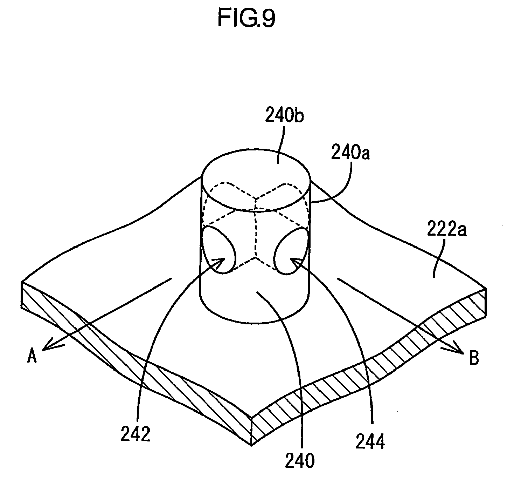

A third embodiment will be explained with reference to drawings. FIG. 9 is an enlarged perspective view of a positioning pin that is provided in a backlight device according to the third embodiment and corresponds to FIG. 5 of the first embodiment. Unlike the first embodiment, the backlight device of the third embodiment includes a positioning pin 240 and through holes 242, 244, and the number and an arrangement of the through holes 242, 244 are different from the first embodiment. Other configurations are similar to those in the first embodiment, and therefore, configuration, operations, and effects will not be explained. In FIG. 9, the components represented by the reference numbers to which two hundreds is added are same as those in the first embodiment.

In the backlight device according to the third embodiment, two through holes are provided on a peripheral surface of the positioning pin 240. The two through holes 242, 244 cross at substantially a middle portion thereof and an opening 242a, 244a of each through hole 242, 244 faces crossing directions (directions represented by A and B in FIG. 9). Therefore, if the LED unit is arranged along the long side and the short side and the positioning pin 240 is fitted to the fitting portion provided in the vicinity of a corner of the light guide plate, light from the LED unit provided along the long side and light from the LED unit provided along the short side easily passes through the through holes 242, 244.

### <Fourth Embodiment>

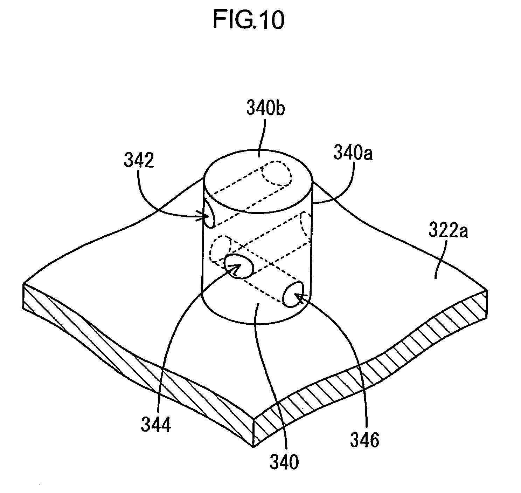

A fourth embodiment will be explained with reference to drawings. FIG. 10 is an enlarged perspective view of a positioning pin 340 that is provided in a backlight device according to the fourth embodiment and corresponds to FIG. 5 of the first embodiment. Unlike the first embodiment, the backlight device of the fourth embodiment includes a positioning pin 340 and through holes 342, 344, 346 and the number and an arrangement of the through holes 342, 344, 346 are different from the first embodiment. Other configurations are similar to those in the first embodiment, and therefore, configuration, operations, and effects will not be explained. In FIG. 10, the components represented by the reference numbers to which three hundreds is added are same as those in the first embodiment.

In the backlight device according to the fourth embodiment, three through holes 342, 344, 346 are formed in the peripheral surface of the positioning pin 340. The three through holes 342, 344, 346 are provided at different heights of the positioning pin 340 and an opening of each through hole faces in a different direction. With such three through holes 342, 344, 346 formed in the positioning pin 340, light easily passes through the through holes 342, 344, 346 of the positioning pin 340.

### <Fifth Embodiment>

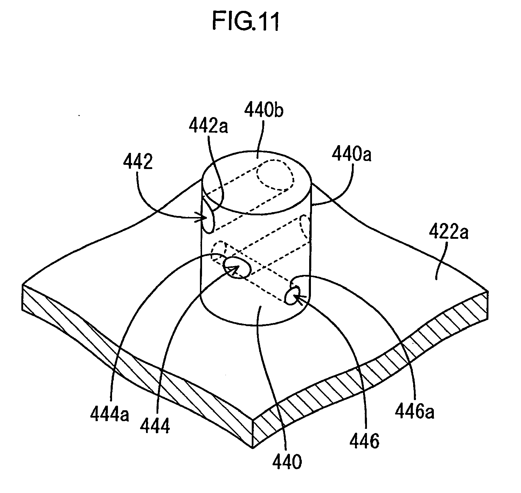

A fifth embodiment will be explained with reference to drawings. FIG. 11 is an enlarged perspective view of a positioning pin that is provided in a backlight device according to the fifth embodiment and corresponds to FIG. 5 of the first embodiment. Unlike the first embodiment, the backlight device of the fifth embodiment includes a positioning pin 440 and through holes 342, 344, 346 having openings 342a, 344a, 346a. Other configurations are similar to those in the fourth embodiment, and therefore, configuration, operations, and effects will not be explained. In FIG. 11, the components represented by the reference numbers to which five hundreds is added are same as those in the first embodiment.

In the backlight device according to the fifth embodiment, three through holes 442, 444, 446 are formed in a peripheral surface of the positioning pin 440, and each of openings 442a, 444a, 446a of the through holes 442, 444, 446 has a different size. Among the three through holes 442, 444, 446, the through hole 442 provided at the uppermost side has a largest opening 442a and the size of the opening decreases as is closer to the lower side (from the opening 444a of the through hole 444 to the opening 446a of the through hole 446) . The size of the openings 442a, 444a, 446a is adjusted according to a distance between each opening 442a, 444a, 446a and the LED light source which each of the openings 442a, 444a, 446a faces.

### <Sixth Embodiment>

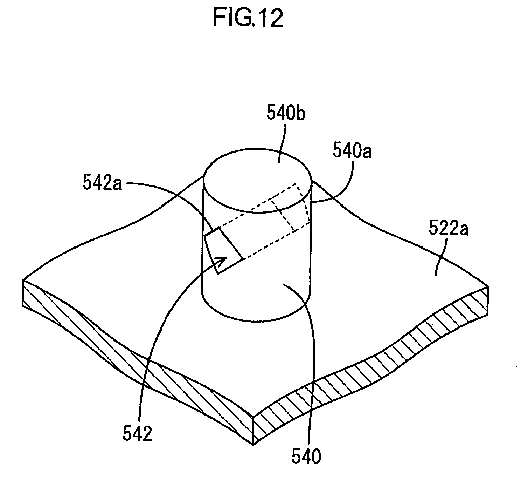

A sixth embodiment will be explained with reference to drawings. FIG. 12 is an enlarged perspective view of a positioning pin 540 that is provided in a backlight device according to the sixth embodiment and corresponds to FIG. 5 of the first embodiment. Unlike the first embodiment, the backlight device of the sixth embodiment includes a positioning pin 540 having a through hole, and the through hole has an opening 540a that is formed in a shape different from the one in the first embodiment. Other configurations are similar to those in the first embodiment, and therefore, configuration, operations, and effects will not be explained. In FIG. 12, the components represented by the reference numbers to which five hundreds is added are same as those in the first embodiment.

In the backlight device according to the sixth embodiment, the positioning pin 540 has the through hole 542 on its peripheral surface and the through hole 542 has an opening 542a. The through hole 542 and the opening 542a are formed in a rectangular shape. With such a configuration of the through hole 542 and the opening 542a, light reaching the vicinity of the positioning pin 540 passes through the through hole 542. The light is less likely to be blocked by the positioning pin 540.

Correspondence between the configuration of each embodiment and the configuration of the present invention is as follows. The LED light source 28, 128 is an example of a light source. The backlight chassis 22, 122 is an example of a housing member. The backlight device 24, 124 is an example of a lighting device. The positioning pin 40, 140, 240, 340, 440, 540 is an example of a projection.

Modifications of each of the embodiments will be described below.
(1) In the above embodiments, the LED light source that is a planer light source is used as the light source. However, a linear light source such a discharge tube may be used as the light source.

(2) A shape of the positioning pin and the number and the arrangement of the positioning pins may be altered if necessary.

(3) A shape of the through hole of the positioning pin and the number and the arrangement of the through holes may be altered if necessary.

(4) In the above embodiments, the liquid crystal display device including the liquid crystal panel is used as a display panel. The technology can be applied to display devices including other types of display components.

(5) In the above embodiments, the television receiver including the tuner is used. However, the technology can be applied to a display device without a tuner.

The embodiments according to the present invention have been described. The present invention is not limited to the embodiments explained in the above description with reference to the drawings. The above modifications may be included in the technical scope of the present invention, for example.

The technical elements described in the specification or illustrated in the drawings exhibit the technical usefulness individually or in various combinations thereof. The technical elements are not limited to the combinations defined in the claims at the time of filing the application. Furthermore, the technologies illustrated in the specification or the drawings realize a plurality of purposes at the same time and have a technical usefulness when one of the purposes is realized.

### EXPLANATION OF SYMBOLS

TV: Television receiver, Ca, Cb: Cabinet, T: Tuner, S: stand, 10, 110: Liquid crystal display device, 12: Bezel, 14: Frame, 16, 116: Liquid crystal panel, 18, 118: Optical member, 18a: Diffuser sheet, 18b: Lens sheet, 18c: reflecting type polarizing sheet, 20, 120: Light guide plate, 20a, 120a: Light entrance surface, 20b, 120b: Front surface (of light guide plate), 20c, 120c: Rear surface (of light guide plate), 22, 122: Backlight chassis, 22a, 122a, 222a, 322a, 422a, 522a: Bottom plate, 22b, 22c, 122b, 122c: Side plate, 24, 124: Backlight device, 26, 126: Reflection sheet, 28, 128: LED light source, 30, 130: LED board, 32, 132: LED unit, 38, 138: Fitting portion, 39, 139: Reflection sheet hole, 40, 140, 240, 340, 440, 540: Positioning pin, 42, 142, 242, 342, 344, 346, 442, 444, 446, 542: Through hole, 42a, 442a, 444a, 446a, 542a, 544a, 546a: Opening (of through hole), 112a: Top bezel, 112b: Bottom bezel, 112c: Side bezel, 113: Insulation sheet, 114a: Top frame, 114b: Bottom frame, 114c: Side frame, 115: Drive circuit board, 119: Heat sink, 119a: Bottom surface portion, 119b: Side surface portion, 123: Protective cover, 131: Cable holder, 134a, 134b: Reflection member

## Claims

1. A lighting device comprising:
a light source;
a light guide plate having a light entrance surface on its side surface that faces the light source, the light guide plate configured to guide light emitted from the light source and entering the light entrance surface; and
a housing member, the housing member including:
a bottom plate having a peripheral edge and a main surface;
a side plate rising from the peripheral edge on a main surface side; and
a projection projecting from the main surface of the bottom plate and having a through hole formed in its side surface and through the projection, the housing member housing the light source and the light guide plate on the main surface side of the bottom plate;
the lighting device further comprising:
a fitting portion provided on the light guide plate so as to be recessed or formed through the light guide plate corresponding to the projection, and the fitting portion configured to be fitted to the projection.

2. The lighting device according to claim 1, wherein the through hole has an opening and is formed in the projection such that the opening faces the light source that is closest to the through hole.

3. The lighting device according to one of claims 1 and 2, further comprising:
a reflection sheet provided between the light guide plate and the main surface of the housing member and configured to reflect light, the reflection sheet having a reflection sheet hole that is formed through the reflection sheet and corresponding to the projection, wherein:
the projection is inserted through the reflection sheet hole of the reflection sheet and fitted to the fitting portion.

4. The lighting device according to one of claims 1 to 3, wherein:
the light guide plate has a plurality of side surfaces as a plurality of light entrance surfaces; and
the light source includes a plurality of light sources, and the light sources are arranged to face each of the light entrance surfaces of the side surfaces of the light guide plate.

5. The lighting device according to one of claims 1 to 4, wherein the through hole includes a plurality of through holes.

6. The lighting device according to any one of claims 1 to 5, wherein the bottom plate of the housing member and the projection are integrally molded with each other.

7. The lighting device according to any one of claims 1 to 6, further comprising a reflection member provided between the light source and the light guide plate, wherein:
the light entrance surface is formed in an elongated shape; and
the reflection member is provided along the elongated shape of the light entrance surface.

8. A display device comprising:
the lighting device according to any one of claims 1 to 7; and
a display panel configured to provide display using light from the lighting device.

9. The display device according to claim 8, wherein the display panel is a liquid crystal panel using liquid crystals.

10. A television receiver comprising the display device according to one of claims 8 and 9.
